# EUROPEAN PATENT APPLICATION

(11) **EP 1 429 499 A2**
(43) Date of publication of application: **16.06.2004**
(21) Application number: 03028305.5
(22) Date of filing: 09.12.2003
(51) Int. Cl.: H04L 12/56

(54) **Resources-reserving method and packet communication system**

(30) Priority: 10.12.2002 JP 2002357723
(71) Applicant: MATSUSHITA ELECTRIC INDUSTRIAL CO., LTD., Kadoma-shi, Osaka 571-8501 (JP)
(72) Inventor: Ando, Satoshi, Fukuoka-Ken,Munataka-gun 811-3217 (JP); Sawabe, Kazuhide, Katano-shi,Osaka, Katano 576-0054 (JP); Kawaguchi, Yuichi, Fukuoka-ken,Kasuya-gun 811-2413 (JP); Oomoto, Masao, Fukuoka-ken, Kasuya-gun 811-2416 (JP); Shimizu, Yuji, Koga-shi, Fukuoka-ken, Koga 811-3114 (JP)
(74) Representative: Balsters, Robert

(57) **Abstract**

A method for reserving communication resources in a gang of apparatus that include a terminal (T1) operable to transmit packets, relays (X0) to(X4) operable to relay the packets, and a receiver (T2) operable to receive the packets. The method comprises defining a link for interconnecting respective interfaces of two apparatus selected from the gang of apparatus, defining a path between the transmitter (T1) and the receiver (T2) as an assembly of the links. checking all of the links that form the path to see how the links are connected together, and reserving the resources in accordance with the content of requested reservation when all of the links that form the path are found connected together in accordance with the content of the requested reservation.

## Description

The present invention relates to a packet communication system operable to communicate electronic data through a packet-switching network. More particularly, it relates to an art for reserving resources in the packet communication system.

A resources-reserving method in a packet-switching network is taught in references such as non-patent reference 1 (RFC2205 of IETF "Resource ReSerVation Protocol (RSVP)") and non-patent reference 2 (RFC2814 of IETF "SBM (Subnet Bandwidth Manager): A Protocol for RSVP-based Admission Control over IEEE 802-style networks").

The resources-reserving method as described in the references is now outlined. A reservation message is exchanged between a transmitter and a receiver. Each relay for relaying packets that contain the reservation message determines whether resources in each interface of the relay are reserved. The interfaces are solely determined in accordance with transfer information during the relaying of the packets. The packets are repeatedly transferred, in accordance with the transfer information, to the relays or receiver on a communication path. In this way, resources in each of the interfaces are reserved in all of the relays on the communication path.

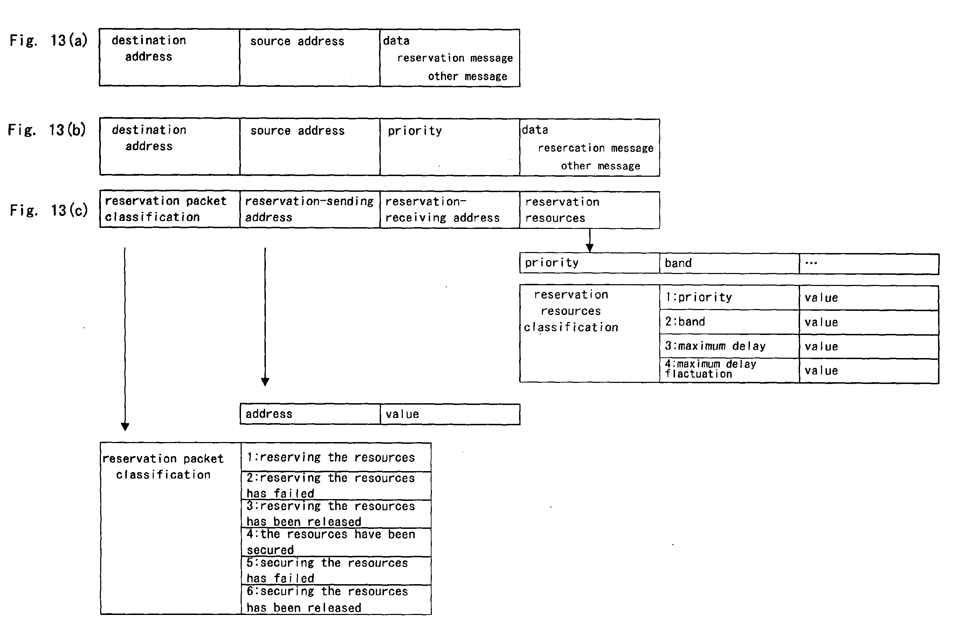

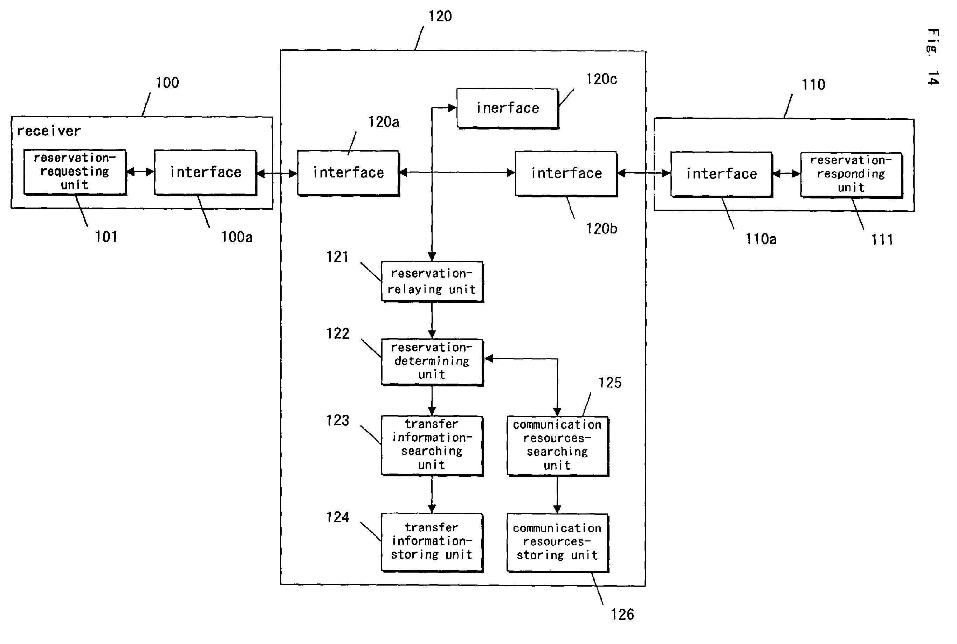

The following discusses the above prior art in further detail with reference to Figs. 13 and 14. Fig. 13 (a) illustrates how each of the packets is constructed. As seen from Fig. 13, the packet includes respective fields of a destination address, a source address, and data.

As shown in Fig. 13 (b), the packet sometimes includes a field of priority. The priority is a piece of information to determine whether reservation resources are used for each of the packets.

The field of data as illustrated in Fig. 13 (a) or 13 (b) may include a reservation message as shown in Fig. 13 (c), and other messages.

The reservation message may include fields such as a reservation packet classification, a reservation-sending address, a reservation-receiving address, and reservation resources.

In the field of reservation packet classification, values such as "reserving the resources", "reserving the resources has failed", "reserving the resources has been released", "the resources have been secured", "securing the resources has failed", and "securing the resources has been released" are set.

In the field of reservation resources, values such as priority, a band, a maximum delay, and a maximum delay fluctuation are set.

A sequence of prior art reservation is now described with reference to Fig. 14.

A receiver 100 sends packets into a transmitter 110. A reservation-requesting unit 101 in the receiver 100 transfers the packets to an interface 110a of the transmitter 110 from an interface 100a of the receiver 100. In each of the packets, a value for requesting a reservation of resources is set in the field of reservation packet classification; an address of the transmitter 110 is set in the field of reservation-sending address; and an address of the receiver 100 is set in the field of reservation-receiving address.

At this time, the packet that carries the reservation message is addressed to the transmitter 110 as a destination address, and is addressed to the receiver 100 as a source address.

### Reserving the resources (receiver → transmitter)

Packets delivering a reservation message to reserve resources are at first received by a relay 120 that is located on a path between the receiver and the transmitter.

in the relay 120 in receipt of the reservation message, a transfer information-searching unit 123 searches a transfer information-storing unit 124 for an interface, through which the packets are transferred to the transmitter 110. A communication resources-searching unit 125 searches a communication resources-storing unit 126 for surplus resources in each of the interfaces searched by the transfer information-searching unit 123. A reservation-determining unit 122 compares the reservation resources in the reservation message with the surplus resources searched by the communication resource-searching unit 125, thereby determining whether a reservation can be made.

In the relay 120, the transfer information-searching unit 123 searches the transfer information-storing unit 124 for an interface, through which the reservation packets are transferred to the transmitter 110.

When the surplus resources fall short of resources specified by the reservation resources, or when the relay 120 fails to search the interface operable to transfer the reservation packets, then the relay 120 changes the content of the reservation packet classification in the reservation message from "reserving the resources" into "reserving the resources has failed". The relay 120 sends packets having such a reservation message to a packet's source address or rather the receiver 100.

When the surplus resources are sufficient with respect to the resources specified by the reservation resources, and when the relay 120 successfully searches the interface operable to transfer the reservation packets, then the relay 120 sends the reservation message to the transmitter 110 via an interface 120b that is searched in accordance with a packet's destination address.

When there are several relays on the path, then the remaining relays repeatedly process the packets in a manner similar to the above. When issuing or receiving the reservation message that "reserving the resources has failed", then the relay 120 restores surplus resources that are reduced when relaying the reservation message of "reserving the resources".

### (Returning of the reservation message from the transmitter)

The transmitter 110 in receipt of the reservation message containing the reservation message classification of "reserving the resources" changes the content of the reservation packet classification to "the resources have been secured" from "reserving the resources". Then, the transmitter 110 feeds packets having such a reservation message into a packet's source address or rather the receiver 100 using a reservation-responding unit 111.

The reservation message in each of the packets fed from the transmitter 110 (the content of the reservation message classification has already been changed to "the resources have been secured") is transferred in an opposite direction through the same path as that during the request for reservation.

### Securing the resources (receiver ← transmitter)

The packet carrying the reservation message that has the reservation message classification stating, "the resources have been secured", is at first received by the relay 120 on the path between the receiver and the transmitter.

In the relay 120 in receipt of the reservation message, the transfer information-searching unit 123 searches the transfer information-storing unit 124 for an interface, through which the packets are transferred to the receiver 100.

In the relay 120, the communication resource-searching unit 125 searches the communication resource-storing unit 126 for surplus resources in the searched interface.

The reservation-determining unit 122 compares the reservation resources in the reservation message with the surplus resources searched by the communication resource-searching unit 125, thereby determining whether a reservation can be made.

When the surplus resources fall short of resources specified by the reservation resources, then the relay 120 changes the content of the reservation packet classification from "the resources have been reserved" to "securing the resources has failed". The relay 120 feeds packets having such a reservation message into a packet's source address or rather the transmitter 110.

When the surplus resources are sufficient with respect to the resources specified by the reservation resources, then the relay 120 sends the reservation message to a packet's destination address or rather the receiver 100.

When there are several relays on the path, then the remaining relays repeatedly process the reservation message in a manner similar to the above.

When issuing or receiving the reservation message that "reserving the resources has failed", then the relay 120 restores surplus resources that are reduced when the relay 120 relays the reservation message that "the resources have been secured".

The receiver 100 in receipt of the reservation message that "reserving the resources has failed" tries to request a reservation again by reducing the requested reservation resources, or otherwise gives up communication.

The receiver 100 in receipt of the reservation message that "the resources have been secured" starts communication within the range of reserved resources.

However, the prior art has problems as given below.
(1)All of the relays for relaying communication between the receiver and the transmitter must handle the reservation message. This imposes heavy burdens on the relays.
(2)Even if resources can be insured during reservation, communication quality similar to that during the reservation cannot be stored when the movement of either the receiver or the transmitter or otherwise both of them after the reservation changes a communication path. This is because the changed communication path forces the communication to be made through a non-reserved path until re-reservation is completed after the above movement.

In view of the above, a first object of the present invention is to provide a resources-reserving method whereby a lightened burden is imposed on relays.

A second object of the present invention is to provide a resources-reserving method whereby communication having a certain level of quality can be made between a transmitter and a receiver, even with the movement of the receiver and/or transmitter after the resource reservation.

A first aspect of the present invention provides a resources-reserving method comprising: defining a communication path as a link assembly for interconnecting interfaces; and reserving resources on the communication path in accordance with the content of requested reservation when all links that form the communication path can be connected together in accordance with the content of the requested reservation.

A second aspect of the present invention provides a resources-reserving method comprising; reserving communication resources in a gang of apparatus that include a transmitter operable to transmit packets, a relay operable to relay the packets, and a receiver operable to receive the packets; defining a link for interconnecting respective interfaces of two apparatus selected from the gang of apparatus; defining a path between the transmitter and the receiver as an assembly of the links; checking all of the links that form the path to examine how the links are connected together; and reserving the resources in accordance with the content of requested reservation when all of the links that form the path are found to be connected together in accordance with the content of the requested reservation.

The above method reserves the resources through the links. This feature relieves the relay of reservation message processing. As a result, a lightened burden is imposed on the relay.

A third aspect of the present invention provides a resources-reserving method as defined in the second aspect of the present invention, further comprising; refusing to reserve the resources when at lease one of the links that form the path fails to meet the content of the requested reservation.

The above method handles the links, and consequently can refuse reservation in such a manner as to process a reservation message.

A fourth aspect of the present invention provides a resources-reserving method as defined in the second aspect of the present invention, wherein a reservation controller different from the relay practices batch processing of handling the links, checking the links to examine how the links can be connected together, and reserving the resources.

The batch processing as described above releases the relay from reservation processing.

A fifth aspect of the present invention provides a resources-reserving method as defined in the second aspect of the present invention, wherein the content of the requested reservation includes an either band or priority, or otherwise both of them.

The above method copes with various types of the content of reservation.

A sixth aspect of the present invention provides a resources-reserving method as defined in the second aspect of the present invention, wherein the links that form the path include real and virtual links in which the real link forms a path dependant upon respective positions of the transmitter and/or the receiver during reservation, while the virtual link forms a path dependant upon respective moved positions of the transmitter and/or the receiver.

When possible movement of the receiver or the transmitter after reservation changes the path, then the use of the virtual link provides a certain level of communication quality, provided that such a change in path falls within a range of the resources being reserved through the virtual link.

A seventh aspect of the present invention provides a resources-reserving method as defined in the sixth aspect of the present invention, wherein when the same link weaves the path dependant upon respective positions of the transmitter and/or receiver during reservation with the path dependant upon respective moved positions of the transmitter and/or the receiver, then it is assumed that only a single path is present in the same link.

The above method eliminates overlapped reservations that are difficult to distinguish from one another with reference to a reservation message. As a result, an efficient and effective path is available.

The above, and other objects, features and advantages of the present invention will become apparent from the following description read in conjunction with the accompanying drawings, in which like reference numerals designate the same elements.
Fig. 1 is a block diagram illustrating a packet communication system according to a first embodiment of the present invention;
Fig. 2 is a block diagram illustrating a terminal according to the first embodiment;
Fig. 3 is a block diagram illustrating a relay according to the first embodiment;
Fig. 4 is a block diagram illustrating a reservation controller according the first embodiment;
Figs. 5(a) to 5(e) are illustration showing examples of transfer information according to the first embodiment;
Figs. 6(a) and 6(b) are illustration showing examples of connection information according to the first embodiment;
Fig. 7 is a descriptive illustration showing how the packet communication system according to the first embodiment accepts or refuses reservation;
Fig. 8 is a descriptive illustration showing how the packet communication system according to the first embodiment accepts or refuses reservation;
Fig. 9 is a block diagram illustrating a reservation controller according to a second embodiment;
Fig. 10 is an iliustration showing an example of virtual link information according to the second embodiment;
Fig. 11 is a descriptive illustration showing how a packet communication system according to the second embodiment accepts or refuses reservation;
Fig. 12 is a block diagram illustrating a terminal according to the second embodiment;
Figs. 13(a) and 13(b) are descriptive illustrations showing a packet format;
Fig. 13(c) is a descriptive illustration showing a reservation message format; and
Fig. 14 is a block diagram illustrating a prior art packet communication system.

Embodiments of the present invention are now discussed with reference to the accompanying drawings.

### (First embodiment)

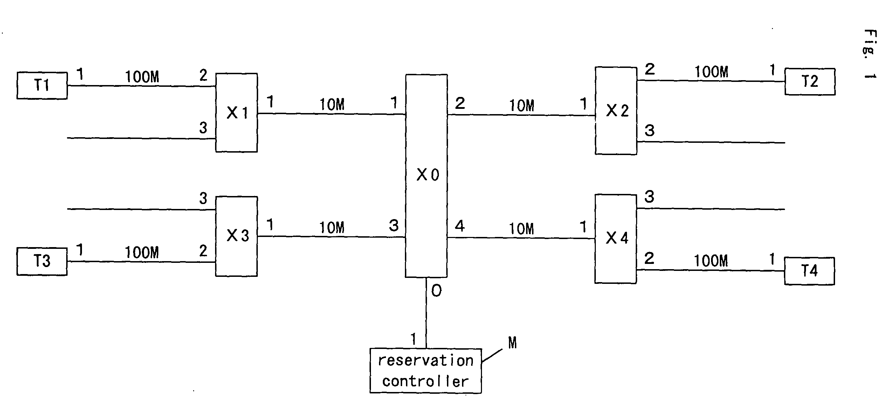

Fig. 1 is a block diagram illustrating a packet communication system according to a first embodiment of the present invention.

The packet communication system of Fig. 1 includes four terminals "T1" to "T4", five relays "X0" to "X4", and a reservation controller "M".

The terminals "T1" to "T4" operate either as transmitters for sending packets or as receivers for receiving the packets. Each of the terminals "T1" to "T4" includes an interface. For convenience of description, assume that the terminals "T1", "T3" work as transmitters, while the remaining terminals "T2", "T4" function as receivers.

In the present specification, each of the interfaces is represented by (terminal name).(interface number). For example, interface No. 1 of the terminal "T1" is expressed by an interface T1.1.

The relay "X0" has five interfaces. Each of the relays "X1" to "X4" has three interfaces. The relays "X0" to "X4" relay the packets among the terminals "T1" to "T4".

The interfaces of the relays are represented in a manner similar to the interfaces of the terminals. For example, interface No. 2 of the relay "X0" is designated by an interface X0.2.

In the present specification, assume that every two interfaces (sending and receiving interfaces) are connected together by a link. For example, Fig. 1 assumes that interface T1.1 → interface X1.2 is connected together by a link with a maximum band of 100Mbps.

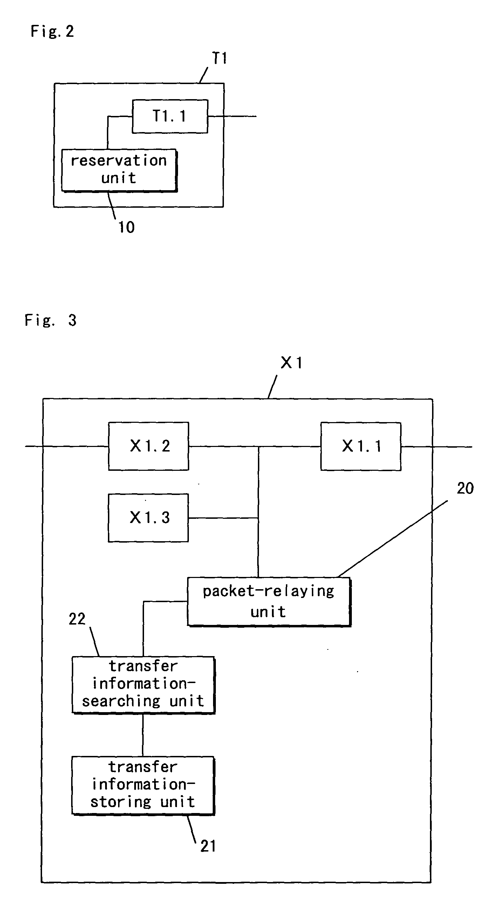

The transmitter is now discussed with reference to Fig. 2. The following discusses only the terminal "T1" because the terminal "T3" is similar in construction to the terminal "T1".

As illustrated in Fig. 2, the terminal "T1" includes a reservation unit 10 and the interface T1.1. The reservation unit 10 transmits a reservation message to the reservation controller "M".

The reservation message from the reservation unit 10 is similar to a prior art reservation message. More specifically, the reservation message includes fields such as a reservation-transmitting address (address of the reservation controller "M"), a reservation-receiving address (self-address of the terminal "T1"), a reservation packet classification, and reservation resources.

As just discussed, the reservation-transmitting address of the reservation message is designated as the address of the reservation controller "M". Alternatively, a specified multicast address may be used when the multicast address shows any reservation controller. For convenience of description, the present specification discusses only the use of the known address of the reservation controller "M".

The following discusses the relays with reference to Fig. 3. In this instance, only the relay "X1" is discussed because the relays "X2 to "X4" are similar in construction to the relay "X1" and because the relay "X0" has more interfaces than the relay "X1" does by one.

As illustrated in Fig. 3, the relay "X1" includes three interfaces X1.1, X1.2, X1.3 and a packet-relaying unit 20. The packet-relaying unit 20 relays the packets through the interfaces X1.1, X1.2, and X1.3.

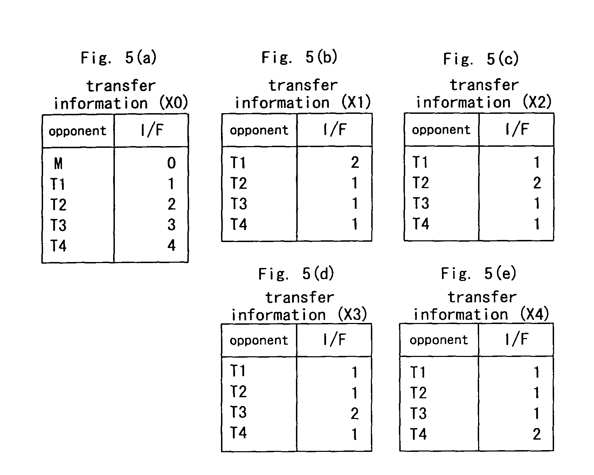

The relay "X1" further includes a transfer information-storing unit 21 having a recording medium such as a memory. The transfer information-storing unit 21 stores transfer information as illustrated in Fig. 5 (b). The transfer information includes an opponent terminal (name or address), and the number of an interface, through which the packets are sent to the opponent terminal.

Similarly, the relays "X0", "X2", "X3", and "X4" store pieces of transfer information as illustrated by Figs. 5(a), 5(c), 5(d), and 5(e), respectively.

As illustrated in Fig. 3, the relay "X1" further includes a transfer information-searching unit 22. Upon receipt of a name or address of an opponent terminal from the packet-relaying unit 20, the transfer information-searching unit 22 searches for an interface number that corresponds to the received name or address. The transfer information-searching unit 22 returns results of the search to the packet-relaying unit 20.

The present specification is based on IEEE802.3 and TCP/IP representative of network protocol. The relay includes a hub, a switching hub, and a router. When the relay is designed for packet switching, then such a relay can be any one of the hub, switching hub, and router.

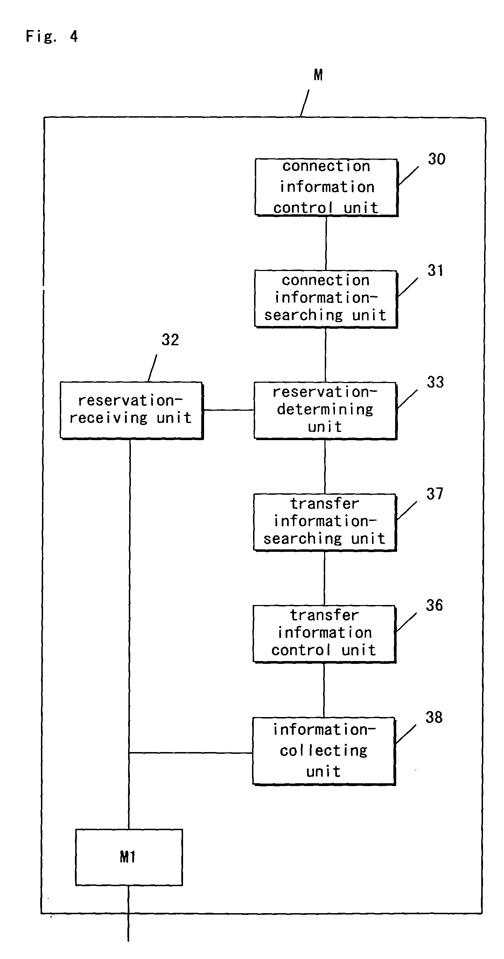

The following discusses the reservation controller "M" with reference to Fig. 4. The reservation controller "M" is outlined below.

The reservation controller "M" defines a link for interconnecting two interfaces. The reservation controller "M" collectively practices two different jobs: examining how the interfaces are connected together through the link; and, reserving resources.

The reservation controller "M" defines a path between a transmitter and a receiver as a link assembly, and examines how all links that form the path are connected together. When all of the path-forming links are found to be connected together in accordance with a reservation request, then the reservation controller "M" reserves the resources in accordance with the content of reservation.

However, the reservation controller "M" refuses reservation when it is found that at least one of the connected links as discussed above fails to meet the content of the reservation request.

In Fig. 4, a reservation-receiving unit 32 in the reservation controller "M" receives the reservation of resources.

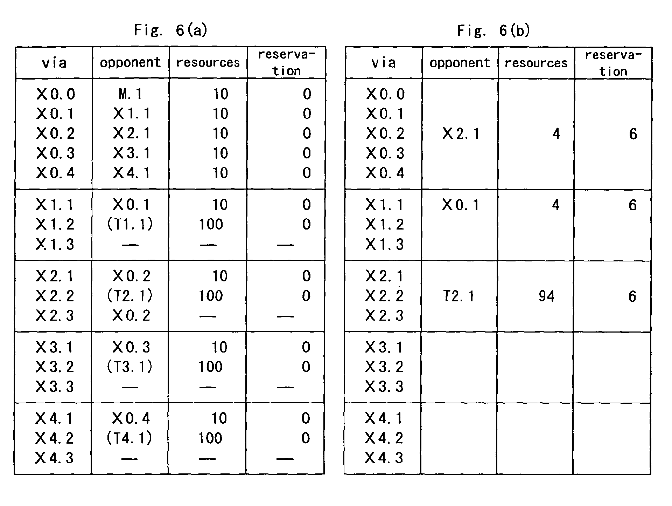

A connection information control unit 30 possesses a storage medium such as a memory. The connection information control unit 30 manages connection information as illustrated in Fig. 6, thereby storing the connected links. Details of the connection information are discussed later.

A connection information-searching unit 31 searches the connection information control unit 30 for a connected state of a link specified by a reservation-determining unit 33. The connection information-searching unit 31 returns results of the search to the reservation-determining unit 33.

As illustrated in Fig. 1, an interface M1 is connected to an interface X0.0 of the relay "X0". An information-collecting unit 38 collects respective pieces of transfer information from the relays "X0" to "X4" through the interface M1.

A transfer information control unit 36 stores the collected transfer information. The transfer information control unit 36 possesses a recording medium such as a memory. A transfer information-searching unit 37 searches the transfer information control unit 36 for required transfer information in response to instructions from the reservation-determining unit 33. The transfer information-searching unit 37 returns results of the search to the reservation-determining unit 33.

When the reservation-receiving unit 32 receives a reservation message, then the reservation-determining unit 33 compares the content of the requested reservation received by the reservation-receiving unit 32 with a connected state of each of the links that form the path between the transmitter and receiver as specified by the reservation message. In this way, the reservation-determining unit 33 determines whether all of the path-forming links are found to be connected together in accordance with the content of the requested reservation. The content of the reservation may be an either band or priority, or otherwise both of them.

Connection information is now discussed with reference to Fig. 6. Fig. 6 (a) illustrates connection information that is obtained when links as illustrated in Fig. 1 are formed, but when no reservation of resources is made.

Each row of the connection information shows characteristics of a link that may extend in forward and reverse directions. The row provides respective fields of "via", "opponent", "resources", and "reservation". The field of "via" illustrates a name of each interface of each of the relays. The field of "opponent" illustrates a name of an interface of a terminal or relay, which opposes the interface specified by the field of "via".

The fields of "resources" and "reservation" show a surplus band value and a reserved band value, respectively. Each unit of these band values is Mbps. Adding a band value of "resources" to a band value of "reservation" results in a maximum band value of the link.

As illustrated in Fig. 6 (a), an interface X1.2 at the seventh row from the top is linked to an interface T1.1 by a 100Mbps-band value without any reservation.

The following discusses a relationship between the transfer information and the connection information. As illustrated in Fig. 5, the transfer information is a combination of a name or address of an opponent terminal and the number of an interface, through which packets are transferred to the opponent terminal.

An interface specified by each of the interface numbers of Fig. 5 may be directly connected to an opponent terminal, or may be indirectly connected thereto through another relay.

This means that only the transfer information is insufficient in determining whether the interface designated by the interface number is directly connected to the opponent terminal.

Meanwhile, the connection information provides information on the links. As a result, a combination of a piece of transfer information for each of the relays and a piece of interface information in the connection information makes it feasible to determine an interface of a relay directly connected to an opponent terminal.

A process is now discussed for defining each of the links and producing the connection information as illustrated in Fig. 6 (a). As illustrated in Fig. 1, the relays "X0" to "X4" are connected together through known links, while the relay "X0" is connected to the reservation controller "M" through a known link. These known links remain unchanged, even with the movement of the terminals "T1" to "T4".

The reservation-determining unit 33 is possible to promptly define links that extend "via" the "opponent" interfaces except for the interfaces X1.2, X1.3, X3.2, X3.3, X2.2, X2.3, X4.2, and X4.3 of Fig. 1, with reference to related "resources" and "reservation".

However, with regard to links that extend "via" the interfaces X1.2, X1.3, X3.2, X3.3, X2.2, X2.3, X4.2, and X4.3, 2, it is impossible to readily identify "opponent" interfaces as enclosed in parentheses in Fig. 6 (a) because of the above-described reasons.

A feature of the present embodiment is that the reservation-determining unit 33 can determine such "opponent" interfaces by repeating study as given below with reference to the transfer information of Figs. 5 (a) to 5(e) and the connection information of Fig. 6 (a) (except for links having indefinite "opponents").

In the study, the reservation-determining unit 33 checks the relay "X1" to determine whether the terminals "T1" to "T4" are directly connected to the relay "X1" or are indirectly connected thereto through another relay.

As discussed below, the reservation-determining unit 33 obtains "knowledge No. 1" based on the relay "X1"-related transfer information of Fig. 5 (b).

Knowledge No. 1: the interface X1.2 is connected to the terminal "T1" while the interface X1.1 is connected to the terminals "T2" to "T4".

The reservation-determining unit 33 examines links via the interfaces X1.1, X1.2, and X1.3 of the relay "X1". (See the six to eighth rows of Fig. 6 (a).)

As a result, the reservation-determining unit 33 obtains "knowledge No. 2" as given below.

Knowledge No. 2: the interface X1.1 is connected to the interface X0.1 of the relay "X0", but the interfaces X1.2 and X1.3 are indefinite.

A combination of knowledge No. 1 and No. 2 permits the reservation-determining unit 33 to recognize that:
- The interface X1.1 of the relay "X1" is connected indirectly to the terminals "T2" to "T4" through the relay "X0" or otherwise another relay;
- The interfaces X1.2 is connected directly to the terminal "T1"; and
- The interface X1.3 is connected to nothing.

The reservation-determining unit 33 repeats the above study, thereby determining the "opponent" interfaces enclosed in parentheses of Fig. 6 (a).

The following discusses, with reference to Figs. 1 to 7, a series of behaviors from the moment when the transmitter or terminal "T1" communicates to the receiver or terminal "T2" to reserves a 6Mbps-band until when the reservation comes with a success.

Assume that the terminal "T1" before sending a reservation message is in a state of Fig. 1. Assume that the relays "X0" to X4" provide the transfer information as illustrated in Figs. 5(a) to 5(e), respectively, and that the reservation controller "M" provides the connection information as illustrated in Fig. 6 (a).

In the terminal "T1", the reservation unit 10 prepares a reservation message as discussed above, i.e.;
reservation packet classification: reserving resources;
reservation-transmitting address: an address of the terminal "T1";
reservation-receiving address: an address of the terminal "T2"; and
reservation resources: a 6Mbps-band.

The terminal "T1" transfers the prepared reservation message to the reservation controller "M". The reservation message reaches the reservation controller "M" at the reservation-receiving unit 32 via the relays "X1", "X0".

The reservation-receiving unit 32 in receipt of the reservation message passes it over to the reservation-determining unit 33. The reservation-determining unit 33 takes out the above content from the reservation message.

With reference to the connection information of Fig. 6 (a), the reservation-determining unit 33 searches an interface directly connected to the interface T1.1 of the transmitter or terminal "T1". As a result, the interface X1.2 is detected.

With reference to the transfer information of Fig. 5 (b), the reservation-determining unit 33 searches one of the interfaces of the relay "X1", through which packets are relayed to the receiver or terminal "T2". As a result, the interface X1.1 is detected.

With reference to the connection information of Fig. 6 (a), the reservation-determining unit 33 searches an interface directly connected to the interface X1.1. As a result, the interface X0.1 is detected.

With reference to the transfer information of Fig. 5 (a), the reservation-determining unit 33 searches one of the interfaces of the relay "X0", through which the packets are relayed to the receiver or terminal "T2". As a result, the interface X0.2 is detected.

With reference to the connection information of Fig. 6 (a), the reservation-determining unit 33 searches an interface directly connected to the interface X0.2. As a result, the interface X2.1 is detected.

With reference to the transfer information of Fig. 5 (c), the reservation-determining unit 33 searches one of the interfaces of the relay "X2", through which the packets are relayed to the receiver or terminal "T2". As a result, the interface X2.2 is detected.

With reference to the connection information of Fig. 6 (a), the reservation-determining unit 33 searches an interface directly connected to the interface X2.2. As a result, the interface T2.1 is detected.

In this way, the interface of the receiver or terminal "T2" is ultimately traced. The reservation-determining unit 33 finishes searching the interfaces.

The above search determines a path between the terminal "T1" (transmitter) and the terminal "T2" (receiver) as a link assembly that follows:
T1.1 → X1.1 → X0.2 → X2.2 → T2.1
where the above link includes only the transmitting interfaces, excluding the receiving interfaces.

With reference to Fig. 6 (a), the reservation-determining unit 33 examines surplus resources for each of the links. As a result, the reservation-determining unit 33 obtains the following information:
T1.1(100) → X1.1(10) → X0.2(10) → X2.2(100) → T2.1
where the above links are expressed by "(interface name) (surplus resources) → (name of the next interface)".

When the surplus resources in all of the links exceed the reservation resources, then the reservation-determining unit 33 determines that a reservation can be made. The reservation-determining unit 33 issues a reservation message in which a reservation packet classification is described as "the resources have been secured". The reservation-determining unit 33 sends such a reservation message to the transmitter or terminal "T1".

In the present embodiment, the surplus resources in all of the links exceed the reservation resources (6Mbps), and the reservation message described as "the resources have been secured" is fed into the terminal "T1".

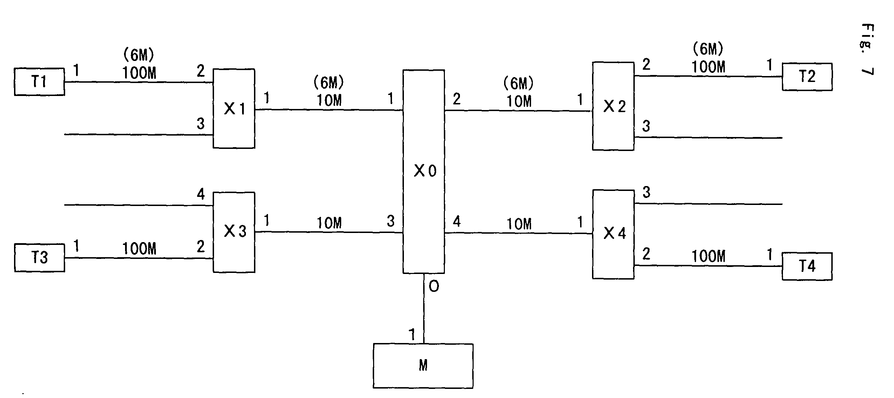

The secured resources insure a path as illustrated in Fig. 7. As a result, the connection information is revised as illustrated in Fig. 6 (b). In the path, surplus resources in each of the links are given as follows:
T1.1 (94) → X1.1 (4) → X0.2 (4) → X2.2 (94) → T2.1

The following discusses with reference to Fig. 7 how the reservation-determining unit 33 refuses a reservation request.

An example as given below presupposes that the terminal "T3" requests the terminal "T2" to reserve a 6Mbps-band again after the resources are secured as illustrated in Fig. 7.

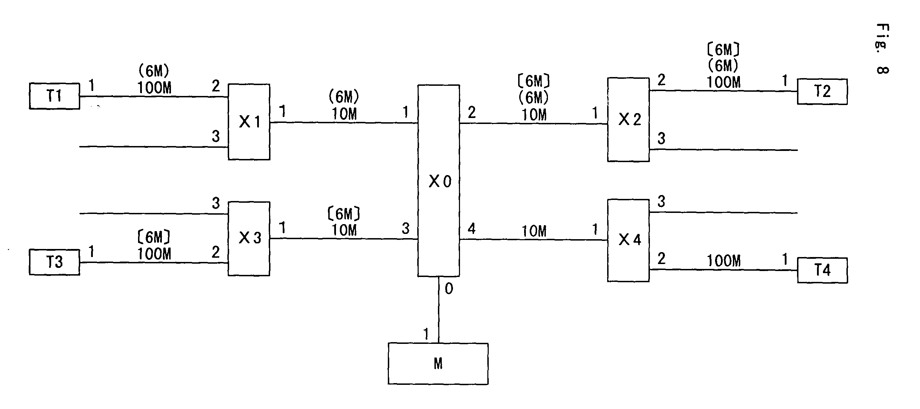

The reservation-determining unit 33 defines a 6Mbps band-related path in accordance with the reservation request from the terminal "T3". In Fig. 8, the 6Mbps band-related path is represented by brackets. The reservation-determining unit 33 determines whether the requested resources can be secured in links that form the path.

The surplus resources in link "X0.2(4) → X2.2" are smaller than the 6Mbps-band requested for reservation. Accordingly, the reservation-determining unit 33 refuses the reservation request. As a result, a reservation message having the reservation packet classification specified as "reserving the resources has failed" is sent out to the terminal "T3".

In conclusion, the processing as described above provides stable quality of previously reserved communication.

### (Second embodiment)

The previous embodiment handles only real links that form a path dependent upon respective positions of a transmitter and/or a receiver during reservation.

The present embodiment discusses virtual links as well as the real links. The virtual links form a path that depends upon respective positions of a moved transmitter and/or a moved receiver.

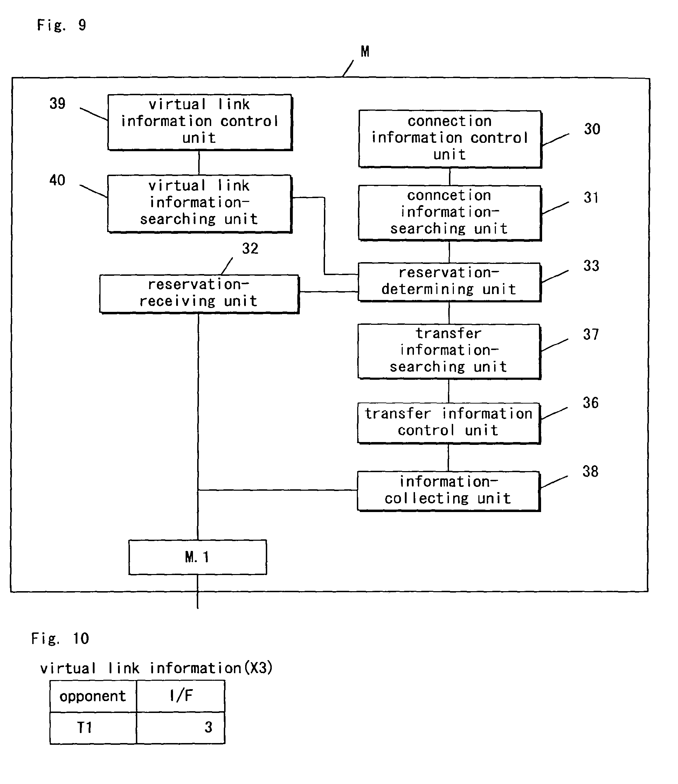

Fig. 9 is a block diagram illustrating a reservation controller "M" according to the present embodiment. The present embodiment differs in reservation controller "M" from the previous embodiment because the reservation controller "M" according to the present embodiment includes a virtual link information control unit 39 and a virtual link information-searching unit 40.

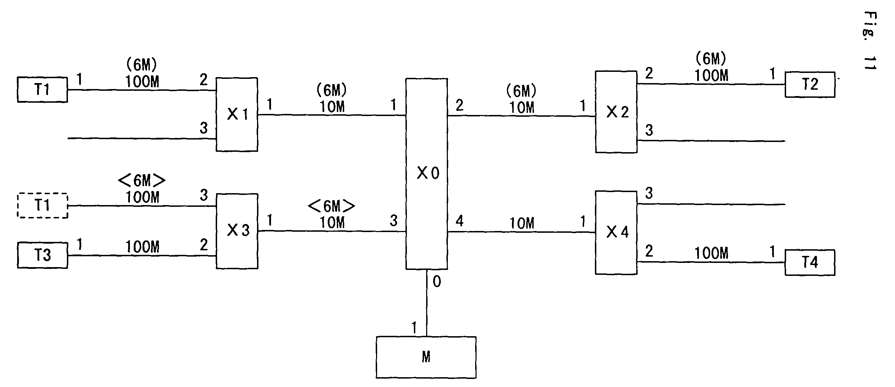

The virtual link information control unit 39 holds virtual link information as illustrated in Fig. 10 in order to govern a connected state of each of the virtual links. The virtual link information-searching unit 40 searches the virtual link information control unit 39 for a connected state of each of the virtual links designated by a reservation-determining unit 33.

As illustrated in Fig. 12, in order to allow terminals "T1" to "T4" to feed virtual link-related information. the terminal "T1" as well as the other terminals includes a virtual link information-registering unit 11 operable to register information on virtual links that form a path dependant upon a position of a moved terminal (transmitter or receiver).

When the same link weaves one path dependant upon respective positions of the transmitter and/or receiver during reservation with another path that depends upon respective positions of the moved transmitter and/or moved receiver, then the reservation-determining unit 33 in the reservation controller "M" assumes that only a single path is present in such an overlapped link.

The term "virtual connection information" as discussed later is a piece of connection information to be provided on the assumption that any one of the terminals has been moved.

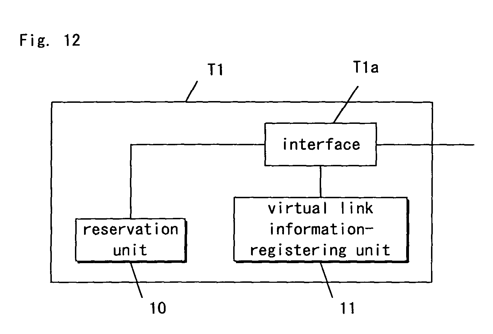

For example, assume that there is a possibility that the terminal "T1" may be moved from one position as represented by a solid line of Fig. 11 to another position as shown by a dashed line of Fig. 11. In this instance, when the moved terminal "T1" can be connected to an interface X3.3, then virtual connection information on a relay "X3" as illustrated in Fig. 10 is established. Such virtual connection information is essentially similar to transfer information as illustrated in Fig. 5.

Such a possibly moved terminal allows the virtual link information-registering unit 11 to feed the virtual connection information into the reservation controller "M". The reservation controller "M" in receipt of the virtual connection information from the terminal permits the virtual link information control unit 39 to provide an additional entry. As a result, the reservation controller "M" holds the information as illustrated in Fig. 10.

The following describes behaviors according to the present embodiment. In short, the behaviors are essentially the same as those in which the virtual connection information of Fig. 10 are added to the transfer information of Fig. 5.

As illustrated in Fig. 11, the virtual connection information of Fig. 10 shows that the moved terminal "T1" as represented by the dashed line can be connected to the interface X3.3.

Similarly to the previous embodiment, a path formed by real links with reference to Figs. 5 and 6 secures resources as given below:
T1.1 (94) → X1.1 (4) → X0.2 (4) → X2.2 (94) → T2.1

In addition, a path formed by virtual links with reference to the virtual connection information of Fig. 10 secures resources that follow:
T1.1 (94) → X3.1 (4) → X0.2 (4) → X2.2 (94) → T2.1
When the real link-formed path is partially or fully overlapped with the virtual link-formed path in the same link, then the reservation-determining unit 33 assumes that only a single path is present in such an overlapped link.

As illustrated in Fig. 11, two links (X0.2 (4) → X2.2 (94) → T2.1) weave the real link-formed path with the virtual link-formed path. On the assumption that these overlapped links form only a single path, surplus resources in all of the links in the packet transmission system as illustrated in Fig. 11 are equal or greater than reservation resources.

As a result, the reservation-determining unit 33 determines that a reservation can be made in both of the real and virtual links, thereby securing the resources.

The overlapped links are available in any one of moments such as before, during, and after the terminal movement. In addition, the presence of only a single link provides smooth communication. A prior art resources-reserving method that depends upon only the transmission of reservation packets is difficult to determine whether the real link is overlapped with the virtual link.

As discussed above, the present embodiment assumes that only a single path is present in the overlapped link. This feature eliminates overlapped reservations that are difficult to distinguish from one another with reference to a reservation message. As a result, an efficient and effective path is available.

Another feature of the present embodiment is that the use of the virtual link insures communication quality having a certain level, even with a change in path due to the movement of the receiver or transmitter after reservation.

The present embodiment discusses a band as the content of reservation. Alternatively, the present embodiment may use priority on a packet-by-packet basis as the content of reservation, in order to distinguish a packet for communication that has reserved resources in advance from other types of packets.

Illustrative examples of such per-packet priority can be referenced by "User-Priority" specified by IEEE802.1p, "Type-of-Service" of Ipv4, and "Traffic-Class" of Ipv6.

The transmitter is notified, as a reservation response, of the priority that forms a reservation request in a reservation message. The transmitter sets such priority information on a packet-by-packet basis. As a result. intermediary relays are possible to readily determine whether received packets are concerned with communication to reserve the resources.

When a plurality of priorities can be specified, then the management of surplus resources separated for each of the priorities realizes further detailed reservation of resources.

In data communication in which communication quality must be guaranteed, the present invention reserves resources on a communication path between a transmitter and a receiver during reservation, while the present invention reserves resources on a changeable path in advance during reservation when the movement of the transmitter or receiver changes the path. As a result, a reservation of resources comparable to that through the path during reservation is made.

In particular, the above feature works on wireless terminal handover that changes base stations. More specifically, before and after a high-speed change in communication path, resources on a communication path after terminal movement are reserved in advance before the terminal movement. This system guarantees stable communication quality immediately after the terminal movement.

Similar to "Diffserv", unused resources are usable in other communication. This feature improves the usability of the resources.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A resources-reserving method comprising:
defining a communication path as a link assembly for interconnecting interfaces: and
reserving resources on the communication path in accordance with the content of requested reservation when all links that form the communication path can be connected together in accordance with the content of the requested reservation.

2. A resources-reserving method comprising:
reserving communication resources in a gang of apparatus that include a transmitter (T1) operable to transmit packets, a relay (X0)∼(X4) operable to relay the packets, and a receiver (T2) operable to receive the packets;
defining a link for interconnecting respective interfaces of two apparatus selected from the gang of apparatus;
defining a path between said transmitter (T1) and said receiver (T2) as an assembly of the links;
checking all of the links that form the path to examine how the links are connected together; and
reserving the communication resources in accordance with content of requested reservation when all of the links that form the path are found to be connected together in accordance with the content of the requested reservation.

3. A resources-reserving method as defined in claim 2, further comprising;
refusing to reserve the resources when at lease one of the links that form the path fails to meet the content of the requested reservation.

4. A resources-reserving method as defined in claim 2, wherein a reservation controller (M) different from said relay (X0)∼(X4) practices batch processing of handling the links, checking the links to examine how the links can be connected together, and reserving the resources.

5. A resources-reserving method as defined in claim 2, wherein the content of the requested reservation includes one of a band and priority, or both of them.

6. A resources-reserving method as defined in claim 2, wherein the links that form the path include real and virtual links in which the real link forms a path dependant upon respective positions of said transmitter (T1) and/or said receiver (T2) during reservation, while the virtual link forms a path dependant upon respective moved positions of said transmitter (T1) and/or said receiver (T2).

7. A resources-reserving method as defined in claim 6, wherein when the same link weaves the path dependant upon respective positions of said transmitter (T1) and/or said receiver (T2) during reservation with the path dependant upon respective moved positions of said transmitter (T1) and/or said receiver (T2), then it is assumed that only a single path is present in the same link.

8. A packet communication system comprising;
a gang of apparatus including a transmitter (T1) operable to transmit packets, a relay (X0)∼(X4) operable to relay the packets, and a receiver (T2) operable to receive the packets;
a reservation controller (M) operable to define a link for interconnecting respective interfaces of two apparatus selected from the gang of apparatus, and to practice batch processing of checking a connected state of each of the links, and of reserving resources;
the reservation controller (M) operable to define a path between said transmitter (T1) and said receiver (T2) as an assembly of the links;
the reservation controller (M) operable to check all of the links that form the path to examine how the links are connected together; and
the reservation controller (M) operable to reserve the resources in accordance with content of requested reservation when all of the links that form the path are found to be connected together in accordance with the content of the requested reservation.

9. A resources-reserving method as defined in claim 8, wherein said reservation controller (M) refuses to reserve the resources when at lease one of the links that form the path fails to meet the content of the requested reservation.

10. A packet communication system as defined in claim 8, wherein the content of the requested reservation includes one of a band and priority, or both of them.

11. A packet communication system as defined in claim 8, wherein the links that form the path include real and virtual links in which the real link forms a path dependant upon respective positions of said transmitter (T1) and/or said receiver (T2) during reservation, while the virtual link forms a path dependant upon respective moved positions of said transmitter (T1) and/or said receiver (T2).

12. A packet communication system as defined in claim 11, wherein when the same link weaves the path dependant upon respective positions of said transmitter (T1) and/or said receiver (T2) during reservation with the path dependant upon respective moved positions of said transmitter (T1) and/or said receiver (T2), then said reservation controller (M) assumes that only a single path is present in the same link.

13. A packet communication system as defined in claim 8, wherein said reservation controller (M) comprises:
a reservation-receiving unit (32) operable to receive a reservation of the resources;
a connection information control unit (30) operable to govern a connected state of each of the links;
a connection information-searching unit (31) operable to search said connection information control unit (30) for a connected state of a specified one of the links; and
a reservation-determining unit (33) operable to compare a connected state of the link between said transmitter (T1) and said receiver (T2) with content of requested reservation received by said reservation-receiving unit (32), thereby determining whether all of the links that form the path are found to be connected together in accordance with the content of the requested reservation.

14. A packet communication system as defined in claim 13, wherein said reservation controller (M) comprises:
a virtual link information control unit (39) operable to govern a connected state of each virtual link; and
a virtual link information-searching unit (40) operable to search said virtual link information control unit for a connected state of a specified one of the virtual links.

15. A packet communication system as defined in claim 14, wherein said transmitter (T1) and/or said receiver (T2) includes a virtual link information-registering unit (11) operable to register information on virtual links that form a path dependent upon respective moved positions of said transmitter (T1) and/or said receiver (T2).
